# EUROPÄISCHE PATENTSCHRIFT

(11) **EP 3 595 924 B1**
(45) Veröffentlichungstag und Bekanntmachung des Hinweises auf die Patenterteilung: **03.08.2022**
(21) Anmeldenummer: 18710050.8
(22) Anmeldetag: 09.03.2018
(51) Int. Cl.: B60L 50/10, B60L 58/13, B60W 10/06, B60W 10/08, B60W 10/26, B60W 20/12, B60W 20/13, B60L 15/20, B60L 7/18, B60W 50/00

(54) **VERFAHREN ZUM BETREIBEN EINES FAHRZEUGS, STEUERGERÄT UND FAHRZEUG**
METHOD FOR OPERATING A VEHICLE,CONTROL APPARATUS AND VEHICLE
PROCÉDÉ DE FONCTION DE VÉHICULE, APPAREIL DE COMMANDE ET VÉHICULE

(30) Priorität: 17.03.2017 DE 102017204466
(43) Veröffentlichungstag der Anmeldung: 22.01.2020
(73) Patentinhaber: Robert Bosch GmbH, 70442 Stuttgart (DE)
(72) Erfinder: SCHLUMPP, Florian, 71672 Marbach (DE)
(86) Internationale Anmeldenummer: PCT/EP2018/055897
(87) Internationale Veröffentlichungsnummer: WO 2018/166910

(56) Entgegenhaltungen:
- DE-A1- 10 346 213
- DE-A1-102010 039 653
- DE-A1-102015 007 913
- DE-A1-102015 223 733
- DE-A1-102016 102 507
- US-A1- 2002 107 618
- US-A1- 2011 166 732
- US-A1- 2014 288 742

## Beschreibung

### Feld der Erfindung

Die vorliegende Erfindung bezieht sich auf ein Verfahren zum Betreiben eines Fahrzeugs, ein Steuergerät und ein Fahrzeug gemäß dem Oberbegriff der unabhängigen Patentansprüche.

### Stand der Technik

DE 10 2016 102 827 A1 zeigt ein Hybridfahrzeug, das eine Kraftmaschine, eine Traktionsbatterie und eine Steuerung aufweist, wobei die Steuerung derart programmiert ist, dass sie einen Ladezustandsschwellenwert, bei dem die Kraftmaschine abgeschaltet wird, reduziert, um den Ladezustand zu reduzieren.

US 2015/0073637 A1 zeigt ein Energiemanagementsystem und ein Verfahren zum Einsparen von Kraftstoff für ein Hybridfahrzeug. US2002/107618 A1 offenbart ein Verfahren zum Betreiben eines Hybridfahrzeugs, wobei eine voraussichtliche Fahrzeuggeschwindigkeit und ein voraussichtliches Streckenprofil verwendet werden, um eine daraus resultierende Änderung des Ladezustands der Traktionsbatterie zu bestimmen und einen Sollwert für den Ladezustand festzulegen, wobei der Sollwert für den Ladezustand zur Ansteuerung des Elektromotors und/oder des Verbrennungsmotors verwendet wird. DE102010039653 A1 offenbart ein Verfahren wie US2002/107618 A1, wobei eine Leistung des Elektromotors zumindest zeitweise konstant gehalten wird. US2011/166732 A1 offenbart ein Verfahren zum Betreiben eines Hybridfahrzeugs gemäss dem Stand der Technik.

### Offenbarung der Erfindung

Die Erfindung geht aus von einem Verfahren zum Betreiben eines Fahrzeugs, aufweisend einen Verbrennungsmotor, mindestens einen Elektromotor, eine Traktionsbatterie und ein Steuergerät, wobei eine voraussichtliche Fahrzeuggeschwindigkeit und ein voraussichtliches Streckenprofil verwendet werden, um eine daraus resultierende Änderung eines Ladezustands der Traktionsbatterie zu bestimmen und einen Sollwert für den Ladezustand festzulegen, wobei der Sollwert für den Ladezustand zur Ansteuerung des Elektromotors und/oder des Verbrennungsmotors verwendet wird.

Hintergrund der Erfindung ist, dass nach Rekuperationsphasen des Fahrzeugs die zusätzliche Energie effizient eingesetzt werden kann, da mithilfe voraussichtlicher Fahrzeuggeschwindigkeit und voraussichtlichem Streckenprofil ermittelt wird, ob eine schnelle Entladung der Batterie notwendig ist. Wird keine zeitnahe Rekuperationsphase erkannt, steigt der Sollwert für den Ladezustand auf einen erreichten Istwert des Ladezustands unmittelbar nach der Rekuperationsphase beziehungsweise auf den maximalen Grenzwert für den Ladezustand der Traktionsbatterie an, je nachdem welcher Wert geringer ist, und wird langsam reduziert. Somit ist eine effiziente Batterienutzung ermöglicht. Die Erfindung ist in in den anhängenden Ansprüchen definiert.

Erfindungsgemäß wird eine Leistung des Elektromotors zumindest zeitweise konstant gehalten. Somit fließen geringere Ströme im Elektromotor sowie in der Traktionsbatterie und dadurch werden elektrische Verluste im Elektromotor und/oder der Traktionsbatterie reduziert.

Weitere vorteilhafte Ausführungsformen der vorliegenden Erfindung sind Gegenstand der Unteransprüche. Gemäß der Erfindung wird der Sollwert des Ladezustands von einem definierten oberen Grenzwert für den Ladezustand und einem definierten unteren Grenzwert für den Ladezustand begrenzt. Von Vorteil ist dabei, dass die Grenzwerte anhand der intrinsischen Batterieparameter und der voraussichtlichen Fahrzeuggeschwindigkeit und dem voraussichtlichem Streckenprofil wählbar sind und der Sollwert für den Ladezustand innerhalb dieser Grenzwerte variabel ist.

Weiter ist es von Vorteil, wenn der obere Grenzwert für den Ladezustand in Abhängigkeit von der Fahrzeuggeschwindigkeit festgelegt wird, wobei der obere Grenzwert für den Ladezustand mit steigender Fahrzeuggeschwindigkeit reduziert wird. Dadurch ist eine größere Energiemenge bei einem unvorhergesehenen Bremsmanöver des Fahrzeugs von der Traktionsbatterie aufnehmbar.

Gemäss der Erfindung wird bei Erreichen des unteren Grenzwertes oder oberen Grenzwertes durch den Sollwert für den Ladezustand die Leistung des Elektromotors angepasst, so dass der Sollwert für den Ladezustand innerhalb der Grenzwerte verbleibt. Somit werden möglichst lange Zeitabschnitte mit konstanter Leistung des Elektromotors erreicht.

Gemäss der Erfindung, wenn die Leistung des Elektromotors derart angepasst wird, dass der Sollwert für den Ladezustand zumindest zeitweise gleich dem unteren oder oberen Grenzwert ist. Dadurch werden die Sprünge zwischen den verschiedenen Leistungen des Elektromotors möglichst klein gehalten.

Gemäß einer vorteilhaften Ausgestaltung wird die Leistung des Elektromotors derart gesteuert, dass sie mittels einer Stufenfunktion als Funktion der Zeit und/oder der Position abbildbar ist. Von Vorteil ist dabei, dass möglichst lange Zeitabschnitte mit konstanter Leistung des Elektromotors erreicht werden.

Vorteilhafterweise wird die voraussichtliche Fahrzeuggeschwindigkeit und/oder das voraussichtliche Streckenprofil mittels eines Navigationsgerätes und/oder eines gespeicherten Fahrprofils bestimmt. Dabei ist das Navigationsgerät signalleitend mit dem Steuergerät verbunden. Die gespeicherten Fahrprofile sind innerhalb des Steuergerätes und/oder in dem Navigationsgerät speicherbar.

Ein gespeichertes Fahrprofil weist ein Streckenprofil und Fahrzeuggeschwindigkeiten auf, die während zurückliegender Fahrten aufgezeichnet wurden.

Gemäß einer vorteilhaften Ausgestaltung werden mehrere Sollwerte für den Ladezustand, insbesondere ein Verlauf des Sollwerts für den Ladezustand, bestimmt und gespeichert, wobei die gespeicherten Sollwerte für den Ladezustand und ein aktueller Energieparameter des Fahrzeugs zur Ansteuerung des Elektromotors und/oder des Verbrennungsmotors verwendet werden. Von Vorteil ist dabei, dass die Sollwerte vor der Fahrt berechnet werden können und dadurch der Rechenaufwand während der Fahrt reduzierbar ist. Zusätzlich können die Sollwerte bei der Streckenauswahl für das Navigationsgerät verwendet werden. Vorteilhafterweise sind die vor der Fahrt berechneten Sollwerte mit dem aktuellen Energieparameter korrelierbar.

Vorteilhafterweise wird der Verlauf des Sollwerts für den Ladezustand als Funktion der Zeit und/oder der Strecke bestimmt.

Von Vorteil ist es weiterhin, wenn als aktueller Energieparameter des Fahrzeugs die aktuelle Fahrzeuggeschwindigkeit und/oder der aktuelle Ladezustand der Traktionsbatterie und/oder die aktuelle Position des Fahrzeugs verwendet wird. Von Vorteil ist dabei, dass diese Energieparameter in einfacher Art und Weise erfasst und ausgewertet werden können.

Gemäß einer vorteilhaften Ausgestaltung wird der Verlauf des Sollwerts für den Ladezustand nach einer Rekuperationsphase des Fahrzeugs neu berechnet. Von Vorteil ist dabei, dass bei unerwarteten Rekuperationsphasen die daraus verfügbare Energie bei der Berechnung der Sollwerte berücksichtigt wird und dadurch vollständig verwendbar ist.

Die Erfindung bei dem Steuergerät für ein Fahrzeug geht aus von einem Steuergerät, das eingerichtet ist, ein Verfahren wie zuvor beschrieben beziehungsweise nach einem der auf das Verfahren bezogenen Ansprüche auszuführen.

Hintergrund der Erfindung ist, dass nach Rekuperationsphasen des Fahrzeugs die zusätzliche Energie effizient eingesetzt werden kann, da das Steuergerät mithilfe voraussichtlicher Fahrzeuggeschwindigkeit und voraussichtlichem Streckenprofil ermittelt, ob eine schnelle Entladung der Batterie notwendig ist. Wird keine zeitnahe Rekuperationsphase erkannt, erhöht das Steuergerät den Sollwert für den Ladezustand auf einen erreichten Istwert des Ladezustands unmittelbar nach der Rekuperationsphase beziehungsweise auf den maximalen Grenzwert für den Ladezustand der Traktionsbatterie, je nachdem welcher Wert geringer ist, und reduziert ihn anschließend langsam. Somit ist eine effiziente Batterienutzung ermöglicht.

Die Erfindung bei dem Fahrzeug aufweisend einen Verbrennungsmotor, einen Elektromotor, eine Traktionsbatterie, geht aus von einem Fahrzeug, das ein Steuergerät wie zuvor beschrieben beziehungsweise nach dem auf das Steuergerät bezogenen Anspruch aufweist.

Hintergrund der Erfindung ist, dass nach Rekuperationsphasen des Fahrzeugs die zusätzliche Energie effizient eingesetzt werden kann, da mithilfe voraussichtlicher Fahrzeuggeschwindigkeit und voraussichtlichem Streckenprofil ermittelt wird, ob eine schnelle Entladung der Batterie notwendig ist. Wird keine zeitnahe Rekuperationsphase erkannt, steigt der Sollwert für den Ladezustand auf einen erreichten Istwert des Ladezustands unmittelbar nach der Rekuperationsphase beziehungsweise auf den maximalen Grenzwert für den Ladezustand der Traktionsbatterie an, je nachdem welcher Wert geringer ist, und wird langsam reduziert. Somit ist eine effiziente Batterienutzung ermöglicht.

Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:
- Fig. 1a: ein voraussichtliches Streckenprofil als Funktion der Zeit;
- Fig. 1b: einen für das in Fig. 1a dargestellte Streckenprofil bestimmten Sollwert des Ladezustands als Funktion der Zeit;
- Fig. 2a: eine voraussichtliche Fahrzeuggeschwindigkeit als Funktion der Zeit;
- Fig. 2b: einen für die in Fig. 2a dargestellte Geschwindigkeit bestimmten Sollwert des Ladezustands als Funktion der Zeit;
- Fig. 3: den Sollwert des Ladezustands, einen oberen Grenzwert und einen unteren Grenzwert für den Ladezustand und eine mittlere Leistung eines Elektromotors als Funktion der Zeit;
- Fig. 4: Kohlenstoffdioxid-Einsparpotentiale für verschiedene Fahrzeugtypen und Fahrzyklen mittels des erfindungsgemäßen Verfahrens und
- Fig. 5: eine schematische Darstellung eines erfindungsgemäßen Fahrzeugs.

### Ausführungsformen der Erfindung

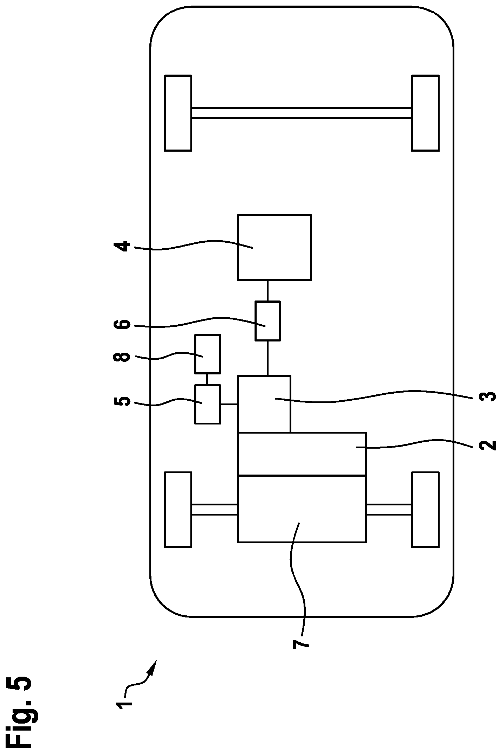

In Fig. 5 ist ein erfindungsgemäßes Fahrzeug 1, insbesondere ein Hybridfahrzeug dargestellt.

Das erfindungsgemäße Fahrzeug 1 weist ein Getriebe 7, einen Verbrennungsmotor 2, einen Elektromotor 3, eine Traktionsbatterie 4, einen Spannungswandler 6, ein Steuergerät 5 und ein Navigationsgerät 8 auf.

Unter einer Batterie wird hierbei beispielsweise eine wiederaufladbare Batterie verstanden, insbesondere eine elektrochemische Batteriezelle und/oder ein Batteriemodul aufweisend zumindest eine elektrochemische Batteriezelle und/oder ein Batteriepack aufweisend zumindest ein Batteriemodul. Die Batteriezelle ist als lithiumbasierte Batteriezelle, insbesondere Lithium-Ionen-Batteriezelle, ausgeführt. Alternativ ist die Batteriezelle als Lithium-Polymer-Batteriezelle oder Nickel-Metallhydrid-Batteriezelle oder Blei-Säure-Batteriezelle oder Lithium-Luft-Batteriezelle oder Lithium-Schwefel-Batteriezelle ausgeführt.

Das Navigationsgerät 8 ist signalleitend mit dem Steuergerät 5 verbunden.

Der Verbrennungsmotor 2 ist mittels des Getriebes 7 mit zumindest einer Antriebsachse des Fahrzeugs 1 verbunden.

Der Elektromotor 3 ist mit dem Verbrennungsmotor 2 und/oder dem Getriebe 7 gekoppelt, beispielsweise mittels einer Riemenkopplung.

Mittels des Elektromotors 3 sind folgende Funktionen ausführbar:
- Rekuperation von Bremsenergie;
- Boosten (elektrisch unterstütztes Antreiben des Fahrzeugs 1, wobei der Elektromotor 3 motorisch betrieben wird);
- Lastpunktanhebung des Verbrennungsmotors 2 (wobei der Elektromotor 3 generatorisch betrieben wird).

Die Traktionsbatterie 4 ist mittels des Spannungswandlers 6 mit dem Elektromotor 3 verbunden. Die Traktionsbatterie 4 speist also den Elektromotor 3 im motorischen Betrieb und wird im generatorischen Betrieb aus dem Elektromotor 3 gespeist.

Vorzugsweise ist die Traktionsbatterie 4 als 48V-Batterie ausgeführt. Die Traktionsbatterie 4 hat also nur einen begrenzten Energiegehalt, daher ist eine effiziente Steuerung der Komponenten des Fahrzeugs 1 mittels des Steuergerätes 5 notwendig.

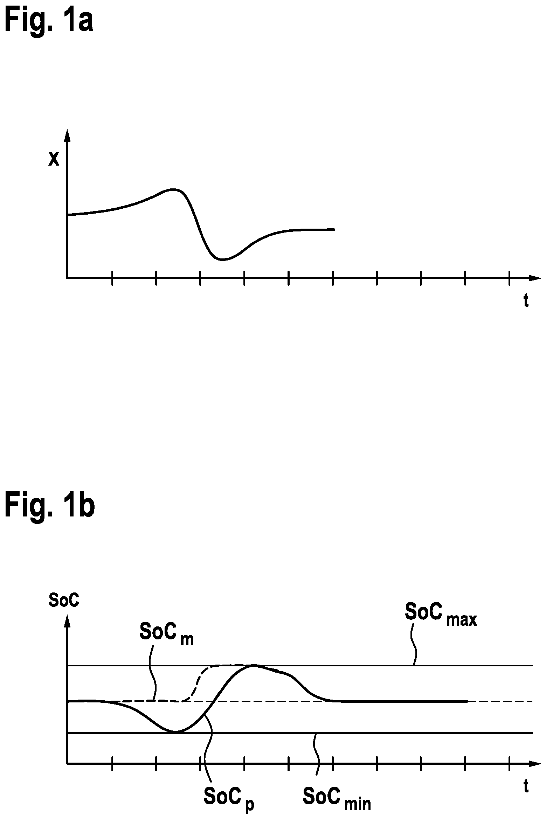

In Fig. 1a ist ein voraussichtliches Streckenprofil x als Funktion der Zeit t dargestellt. Das Streckenprofil x weist einen leichten Anstieg gefolgt von einem abfallenden Streckenabschnitt auf.

Fig. 1b zeigt einen für das in Fig. 1a dargestellte Streckenprofil x resultierenden Verlauf des Ladezustands SoC als Funktion der Zeit t.

Der Ladezustand SoC wird begrenzt von einem oberen Grenzwert für den Ladezustand SoCₘₐₓ und einem unteren Grenzwert für den Ladezustand SoCₘᵢₙ. Die Grenzwerte werden bestimmt durch intrinsische Grenzwerte der Traktionsbatterie 4 und/oder durch das Steuergerät 5.

In der Fig. 1b zeigt SoCₘ einen Verlauf des Ladezustands SoC, der auf einen Mittelwert des Ladezustands geregelt ist. SoCₚ zeigt einen Verlauf eines Sollwertes des Ladezustands SoC, der gemäß des erfindungsgemäßen Verfahrens bestimmt wurde und das voraussichtliche Streckenprofil x berücksichtigt.

Es ist erkennbar, dass der Sollwert des Ladezustands SoCₚ zeitlich vor dem abfallenden Streckenabschnitt bis auf den minimalen Grenzwert SoCₘᵢₙ abgesenkt wird, so dass während des abfallenden Streckenabschnitts eine maximale Ladungsmenge von der Traktionsbatterie 4 aufgenommen werden kann, bevor der Sollwert des Ladezustands SoCₚ den maximalen Grenzwert SoCₘₐₓ erreicht.

Der SoCₘ weist zu Beginn des abfallenden Streckenabschnitts den Mittelwert des Ladezustands SoC auf. Der SoCₘ erreicht den maximalen Grenzwert SoCₘₐₓ zeitlich vor dem Sollwert des Ladezustands SoCₚ. Dabei wird mittels des erfindungsgemäßen Verfahrens eine etwa doppelt so große Ladungsmenge von der Traktionsbatterie 4 gespeichert.

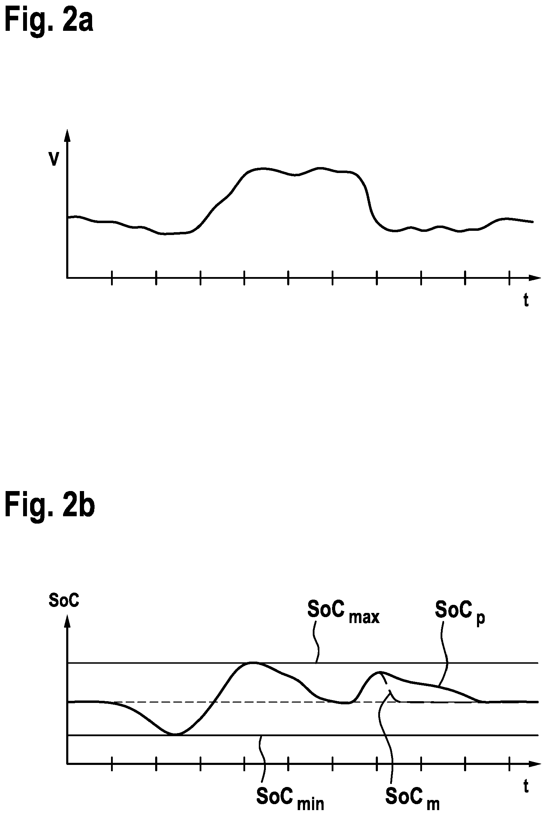

In Fig. 2a ist eine voraussichtliche Fahrzeuggeschwindigkeit v als Funktion der Zeit t dargestellt. Die voraussichtliche Fahrzeuggeschwindigkeit v nimmt im zeitlichen Verlauf zuerst zu, danach wieder ab und bleibt dann konstant.

Fig. 2b zeigt einen für die in Fig. 2a dargestellte voraussichtliche Fahrzeuggeschwindigkeit v resultierenden Verlauf des Ladezustands SoC als Funktion der Zeit t.

Wie in Fig. 1b sind in Fig. 2b ebenfalls die Grenzwerte des Ladezustands SoCₘₐₓ und SoCₘᵢₙ und der Sollwert für des Ladezustand SoCₚ sowie der Ladezustand SoCₘ dargestellt.

Während der Ladezustand SoCₘ nach der Abnahme der Fahrzeuggeschwindigkeit v relativ schnell wieder auf den Mittelwert geregelt wird, berücksichtigt das erfindungsgemäße Verfahren die nachfolgende konstante Fahrzeuggeschwindigkeit v, so dass der Sollwert für den Ladezustand SoCₚ langsamer abnimmt als der Ladezustand SoCₘ.

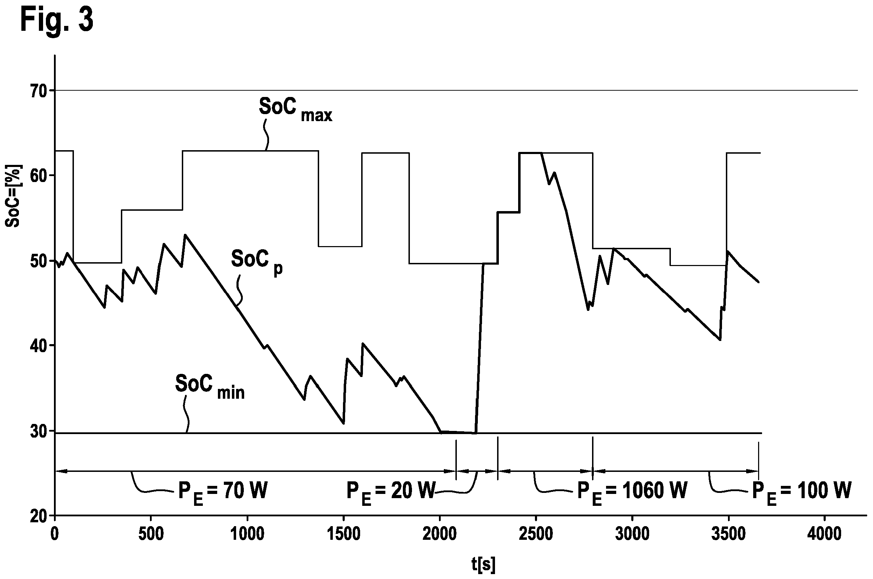

In Fig. 3 sind der Sollwert des Ladezustands SoCₚ, die Grenzwerte für den Ladezustand (SoCₘᵢₙ, SoCₘₐₓ) und eine Leistung des Elektromotors P_{E} als Funktion der Zeit t gemäß dem erfindungsgemäßen Verfahren dargestellt.

Der obere Grenzwert für den Ladezustand SoCₘₐₓ wird abhängig von der Fahrzeuggeschwindigkeit v gewählt. Je höher die Fahrzeuggeschwindigkeit v ist, desto kleiner wird der obere Grenzwert für den Ladezustand SoCₘₐₓ gewählt, damit bei einer nachfolgenden Reduktion der Fahrzeuggeschwindigkeit v eine möglichst große Lademenge in der Traktionsbatterie 4 gespeichert werden kann.

Der Sollwert für den Ladezustand SoCₚ wird innerhalb der Grenzwerte (SoCₘᵢₙ, SoCₘₐₓ) so gewählt, dass die Leistung P_{E} des Elektromotors 3 solange wie möglich konstant bleibt. Sobald der Sollwert für den Ladezustand SoCₚ einen Grenzwert (SoCₘᵢₙ, SoCₘₐₓ) erreicht, wird die Leistung P_{E} des Elektromotors 3 angepasst, so dass der Sollwert für den Ladezustand SoCₚ gleich dem jeweiligen Grenzwert (SoCₘᵢₙ, SoCₘₐₓ) ist.

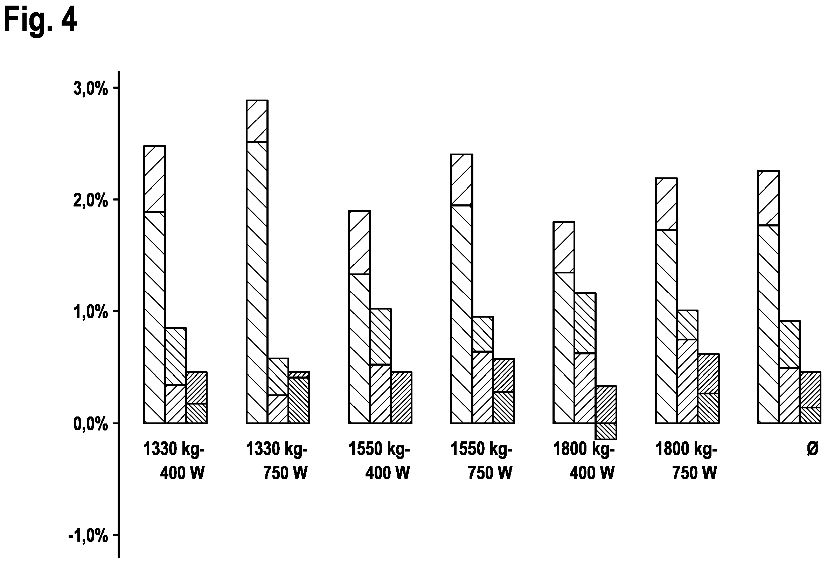

Fig. 4 zeigt einen Vergleich des Kohlenstoffdioxid-Einsparpotentials mit dem erfindungsgemäßen Verfahren zum Betreiben eines Fahrzeuges für verschiedene Fahrzeuge und Fahrzyklen gegenüber einer Betriebsstrategie ohne Sollwertvorgabe für den Ladezustand SoC.

Beispielsweise ist für ein Fahrzeug mit 1330 kg Masse und einem Bordnetzbedarf von 400 W im ersten Balken das Einsparpotential für einen Fahrzyklus mit großer Höhendifferenz und mittlerer Geschwindigkeitsdynamik, im zweiten Balken für einen Fahrzyklus mit mittlerer Höhendifferenz und hoher Geschwindigkeitsdynamik und im dritten Balken für einen Fahrzyklus mit vernachlässigbarer Höhendifferenz und hoher Geschwindigkeitsdynamik dargestellt.

Jeder Balken zeigt zwei Werte: das Einsparpotential basierend auf Sollwerten für den Ladezustand SoCₚ mit Fahrzeuggeschwindigkeiten v gemäß vorgegebenen Geschwindigkeitsbegrenzungen und das Einsparpotential basierend auf Sollwerten für den Ladezustand SoCₚ mit Fahrzeuggeschwindigkeiten v gemäß gespeicherten Fahrprofilen. Dabei übersteigt das Einsparpotential bei der Bestimmung der Sollwerte für den Ladezustand SoCₚ mit Fahrzeuggeschwindigkeiten v gemäß gespeicherten Fahrprofilen das Einsparpotential bei der Bestimmung der Sollwerte für den Ladezustand SoCₚ mit Fahrzeuggeschwindigkeiten v gemäß vorgegebenen Geschwindigkeitsbegrenzungen in allen Fällen.

Die größten Einsparpotentiale für alle Fahrzeuge bestehen bei dem Fahrzyklus mit großer Höhendifferenz und mittlerer Geschwindigkeitsdynamik, gefolgt von dem Fahrzyklus mit mittlerer Höhendifferenz und hoher Geschwindigkeitsdynamik und dem Fahrzyklus mit vernachlässigbarer Höhendifferenz und hoher Geschwindigkeitsdynamik.

## Patentansprüche

1. Verfahren zum Betreiben eines Fahrzeugs (1), aufweisend einen Verbrennungsmotor (2), mindestens einen Elektromotor (3), eine Traktionsbatterie (4) und ein Steuergerät (5),
**wobei**
eine voraussichtliche Fahrzeuggeschwindigkeit (v) und ein voraussichtliches Streckenprofil (x) verwendet werden, um eine daraus resultierende Änderung eines Ladezustands (SoC) der Traktionsbatterie (4) zu bestimmen und einen Sollwert für den Ladezustand (SoCₚ) festzulegen,
wobei der Sollwert für den Ladezustand (SoCₚ) zur Ansteuerung des Elektromotors (3) und/oder des Verbrennungsmotors (2) verwendet wird,
wobei eine Leistung (P_{E}) des Elektromotors (3) zumindest zeitweise konstant gehalten wird,
**dadurch gekennzeichnet, dass**
der Sollwert des Ladezustands (SoCₚ) von einem definierten oberen Grenzwert für den Ladezustand (SoCₘₐₓ) und einem definierten unteren Grenzwert für den Ladezustand (SoCₘᵢₙ) begrenzt wird und bei Erreichen des unteren Grenzwertes (SoCₘᵢₙ) oder oberen Grenzwertes (SoCₘₐₓ) durch den Sollwert für den Ladezustand (SoCₚ) die Leistung des Elektromotors (P_{E}) angepasst wird, so dass der Sollwert für den Ladezustand (SoCₚ) innerhalb der Grenzwerte (SoCₘᵢₙ, SoCₘₐₓ) verbleibt und die Leistung des Elektromotors (P_{E}) derart angepasst wird, dass der Sollwert für den Ladezustand (SoCₚ) zumindest zeitweise gleich dem unteren oder oberen Grenzwert (SoCₘᵢₙ, SoCₘₐₓ) ist.

2. Verfahren nach Anspruch 1,
**dadurch gekennzeichnet, dass**
der obere Grenzwert für den Ladezustand (SoCₘₐₓ) in Abhängigkeit von der Fahrzeuggeschwindigkeit (v) festgelegt wird,
wobei der obere Grenzwert für den Ladezustand (SoCₘₐₓ) mit steigender Fahrzeuggeschwindigkeit (v) reduziert wird.

3. Verfahren nach einem der vorhergehenden Ansprüche,
**dadurch gekennzeichnet, dass**
die Leistung des Elektromotors (P_{E}) derart gesteuert wird, dass sie mittels einer Stufenfunktion als Funktion der Zeit (t) und/oder der Position (x) abbildbar ist.

4. Verfahren nach einem der vorhergehenden Ansprüche,
**dadurch gekennzeichnet, dass**
die voraussichtliche Fahrzeuggeschwindigkeit (v) und/oder das voraussichtliche Streckenprofil (x) mittels eines Navigationsgerätes (8) und/oder eines gespeicherten Fahrprofils bestimmt wird.

5. Verfahren nach einem der vorhergehenden Ansprüche,
**dadurch gekennzeichnet, dass**
mehrere Sollwerte für den Ladezustand (SoCₚ), insbesondere ein Verlauf des Sollwerts für den Ladezustand (SoCₚ), bestimmt und gespeichert werden,
wobei die gespeicherten Sollwerte für den Ladezustand (SoCₚ) und ein aktueller Energieparameter des Fahrzeugs (1) zur Ansteuerung des Elektromotors (3) und/oder des Verbrennungsmotors (2) verwendet werden.

6. Verfahren nach Anspruch 5,
**dadurch gekennzeichnet, dass**
der Verlauf des Sollwerts für den Ladezustand (SoCₚ) als Funktion der Zeit und/oder der Strecke bestimmt wird.

7. Verfahren nach einem der Ansprüche 5 bis 6,
**dadurch gekennzeichnet, dass**
als aktueller Energieparameter des Fahrzeugs (1) die aktuelle Fahrzeuggeschwindigkeit (v) und/oder der aktuelle Ladezustand (SoC) der Traktionsbatterie (4) und/oder die aktuelle Position (x) des Fahrzeugs verwendet wird.

8. Verfahren nach einem der Ansprüche 5 bis 7,
**dadurch gekennzeichnet, dass**
der Verlauf des Sollwerts für den Ladezustand (SoCₚ) nach einer Rekuperationsphase des Fahrzeugs (1) neu berechnet wird.

9. Steuergerät (5) für ein Fahrzeug (1),
**dadurch gekennzeichnet, dass**
das Steuergerät (5) eingerichtet ist, ein Verfahren nach einem der Ansprüche 1 bis 8 auszuführen.

10. Fahrzeug (1) aufweisend einen Verbrennungsmotor (2), einen Elektromotor (3), eine Traktionsbatterie (4),
**dadurch gekennzeichnet, dass**
das Fahrzeug (1) ein Steuergerät (5) nach Anspruch 9 aufweist.

## Claims

1. Method for operating a vehicle (1), having an internal combustion engine (2), at least one electric motor (3), a traction battery (4) and a control device (5),
wherein
an expected vehicle speed (v) and an expected route profile (x) are used in order to determine a resulting change in a state of charge (SoC) of the traction battery (4) and to define a target value for the state of charge (SoCₚ),
wherein the target value for the state of charge (SoCₚ) is used for driving the electric motor (3) and/or the internal combustion engine (2),
wherein a power (P_{E}) of the electric motor (3) is at least temporarily kept constant,
**characterized in that**
the target value for the state of charge (SoCₚ) is limited by a defined upper limit value for the state of charge (SoCₘₐₓ) and a defined lower limit value for the state of charge (SoCₘᵢₙ) and, when the lower limit value (SoCₘᵢₙ) or upper limit value (SoCₘₐₓ) is reached by the target value for the state of charge (SoCₚ), the power of the electric motor (P_{E}) is adapted, so that the target value for the state of charge (SoCₚ) remains within the limit values (SoCₘᵢₙ, SoCₘₐₓ) and the power of the electric motor (P_{E}) is adapted in such a way that the target value for the state of charge (SoCₚ) is at least temporarily equal to the lower or upper limit value (SoCₘᵢₙ, SoCₘₐₓ).

2. Method according to Claim 1,
**characterized in that**
the upper limit value for the state of charge (SoCₘₐₓ) is defined depending on the vehicle speed (v),
wherein the upper limit value for the state of charge (SoCₘₐₓ) is reduced as the vehicle speed (v) increases.

3. Method according to either of the preceding claims, **characterized in that**
the power of the electric motor (P_{E}) is controlled in such a way that it can be mapped by means of a step function as a function of time (t) and/or position (x).

4. Method according to one of the preceding claims, **characterized in that**
the expected vehicle speed (v) and/or the expected route profile (x) are/is determined by means of a navigation device (8) and/or a stored driving profile.

5. Method according to one of the preceding claims, **characterized in that**
a plurality of target values for the state of charge (SoCₚ), in particular a profile of the target value for the state of charge (SoCₚ), are/is determined and stored, wherein the stored target values for the state of charge (SoCₚ) and a current energy parameter of the vehicle (1) are used for driving the electric motor (3) and/or the internal combustion engine (2).

6. Method according to Claim 5,
**characterized in that**
the profile of the target value for the state of charge (SoCₚ) is determined as a function of time and/or route.

7. Method according to either of Claims 5 and 6, **characterized in that**
the current vehicle speed (v) and/or the current state of charge (SoC) of the traction battery (4) and/or the current position (x) of the vehicle are/is used as the current energy parameter of the vehicle (1).

8. Method according to one of Claims 5 to 7,
**characterized in that**
the profile of the target value for the state of charge (SoCₚ) is recalculated after a recuperation phase of the vehicle (1).

9. Control device (5) for a vehicle (1),
**characterized in that**
the control device (5) is designed to execute a method according to one of Claims 1 to 8.

10. Vehicle (1) having an internal combustion engine (2), an electric motor (3) and a traction battery (4),
**characterized in that**
the vehicle (1) has a control device according to Claim 9.

## Revendications

1. Procédé de fonctionnement d'un véhicule (1) comportant un moteur à combustion interne (2), au moins un moteur électrique (3), une batterie de traction (4) et une unité de commande (5),
une vitesse de véhicule estimée (v) et un profil de trajet estimé (x) étant utilisés pour spécifier une variation résultante de l'état de charge (SoC) de la batterie de traction (4) et pour définir une valeur cible de l'état de charge (SoCₚ),
la valeur cible de l'état de charge (SoCₚ) étant utilisée pour commander le moteur électrique (3) et/ou le moteur à combustion interne (2),
la puissance (P_{E}) du moteur électrique (3) étant maintenue constante au moins temporairement,
**caractérisé en ce que**
la valeur cible de l'état de charge (SoCₚ) est limitée par une valeur limite supérieure définie de l'état de charge (SoCₘₐₓ) et une valeur limite inférieure définie de l'état de charge (SoCₘᵢₙ) et, lorsque la valeur limite inférieure (SoCₘᵢₙ) ou la valeur limite supérieure (SoCₘₐₓ) est atteinte par la valeur cible de l'état de charge (SoCₚ), la puissance du moteur électrique (P_{E}) est adaptée de sorte que la valeur cible de l'état de charge (SoCₚ) reste dans les valeurs limites (SoCₘᵢₙ, SoCₘₐₓ) et la puissance du moteur électrique (P_{E}) soit adaptée de manière à ce que la valeur cible de l'état de charge (SoCₚ) soit au moins temporairement égale à la valeur limite inférieure ou supérieure (SoCₘᵢₙ, SoCₘₐₓ).

2. Procédé selon la revendication 1,
**caractérisé en ce que**
la valeur limite supérieure de l'état de charge (SoCₘₐₓ) est spécifiée en fonction de la vitesse de véhicule (v), la valeur limite supérieure de l'état de charge (SoCₘₐₓ) étant réduite à mesure que la vitesse de véhicule (v) augmente.

3. Procédé selon l'une des revendications précédentes, **caractérisé en ce que**
la puissance du moteur électrique (P_{E}) est commandée de manière à pouvoir être reproduite à l'aide d'une fonction échelon en fonction du temps (t) et/ou de la position (x) .

4. Procédé selon l'une des revendications précédentes, **caractérisé en ce que**
la vitesse de véhicule estimée (v) et/ou le profil de trajet estimé (x) sont déterminés à l'aide d'un appareil de navigation (8) et/ou d'un profil de roulement mémorisé.

5. Procédé selon l'une des revendications précédentes, **caractérisé en ce que**
plusieurs valeurs cibles de l'état de charge (SoCₚ), en particulier une évolution de la valeur cible de l'état de charge (SoCₚ), sont déterminées et mémorisées,
les valeurs cibles mémorisées de l'état de charge (SoCₚ) et un paramètre d'énergie actuel du véhicule (1) sont utilisés pour commander le moteur électrique (3) et/ou le moteur à combustion interne (2).

6. Procédé selon la revendication 5,
**caractérisé en ce que**
l'évolution de la valeur cible de l'état de charge (SoCₚ) est déterminée en fonction du temps et/ou du trajet .

7. Procédé selon l'une des revendications 5 et 6, **caractérisé en ce que**
la vitesse de véhicule actuelle (v) et/ou l'état de charge actuel (SoC) de la batterie de traction (4) et/ou la position actuelle (x) du véhicule sont utilisés comme paramètre d'énergie actuel du véhicule (1) .

8. Procédé selon l'une des revendications 5 à 7,
**caractérisé en ce que**
l'évolution de la valeur cible de l'état de charge (SoCₚ) est recalculée après une phase de récupération du véhicule (1).

9. Unité de commande (5) destinée à un véhicule (1), **caractérisée en ce que**
l'unité de commande (5) est conçue pour mettre en œuvre un procédé selon l'une des revendications 1 à 8.

10. Véhicule (1) comportant un moteur à combustion interne (2), un moteur électrique (3), une batterie de traction (4),
**caractérisé en ce que**
le véhicule (1) comporte une unité de commande (5) selon la revendication 9.
